(19) **Europäisches Patentamt / European Patent Office / Office européen des brevets**

(11) **EP 1 759 435 B1**

(12) **FASCICULE DE BREVET EUROPEEN**

(45) Date de publication et mention
de la délivrance du brevet:
**03.03.2010 Bulletin 2010/09**

(21) Numéro de dépôt: **05763946.0**

(22) Date de dépôt: **21.06.2005**

(51) Int Cl.:
*H01Q 3/26* $^{(2006.01)}$

(86) Numéro de dépôt international:
**PCT/EP2005/052888**

(87) Numéro de publication internationale:
**WO 2006/000554 (05.01.2006 Gazette 2006/01)**

(54) **PROCEDE DE GONIOMETRIE MULTI-PARAMETRES PAR SEPARATION DE L'INCIDENCE ET DES PARAMETRES DE NUISANCES**

MULTIPARAMETRISCHES RICHTUNGSFINDUNGSVERFAHREN MIT TRENNUNG VON EREIGNIS- UND STÖRUNGSPARAMETERN

MULTIPARAMETRIC DIRECTION FINDING METHOD COMPRISING THE SEPARATION OF THE INCIDENCE AND NUISANCE PARAMETERS

(84) Etats contractants désignés:
**AT BE BG CH CY CZ DE DK EE ES FI FR GB GR HU IE IS IT LI LT LU MC NL PL PT RO SE SI SK TR**

(30) Priorité: **25.06.2004 FR 0407007**

(43) Date de publication de la demande:
**07.03.2007 Bulletin 2007/10**

(73) Titulaire: **THALES**
**92200 Neuilly sur Seine (FR)**

(72) Inventeurs:
• **FERREOL, Anne**
  **Thales Intellectual Property**
  **94117 Arcueil (FR)**
• **LARZABAL, Pascal**
  **Thales Intellectual Property**
  **94117 Arcueil (FR)**

(74) Mandataire: **Dudouit, Isabelle**
  **Marks & Clerk France**
  **Conseils en Propriété Industrielle**
  **Immeuble " Visium "**
  **22, avenue Aristide Briand**
  **94117 Arcueil Cedex (FR)**

(56) Documents cités:
**US-A1- 2003 052 820**

• **FERREOL A ET AL: "Space frequency direction finding in wide-band and multi-path contexts" IEEE, vol. 5, 5 juin 2000 (2000-06-05), pages 3113-3116, XP010506667**
• **TAGA F: "Smart MUSIC algorithm for DOA estimation" ELECTRONICS LETTERS, IEE STEVENAGE, GB, vol. 33, no. 3, 30 janvier 1997 (1997-01-30), pages 190-191, XP006007029 ISSN: 0013-5194**
• **WANG G ET AL: "Iterative algorithm for direction of arrival estimation with wideband chirp signals" IEE PROCEEDINGS: RADAR, SONAR & NAVIGATION, INSTITUTION OF ELECTRICAL ENGINEERS, GB, vol. 147, no. 5, 3 octobre 2000 (2000-10-03), pages 233-238, XP006014428 ISSN: 1350-2395**
• **MARS J ET AL: "Extensions de la SVD aux données multidimensionnelles : Application à la séparation de sources" COLLOQUE SUR LE TRAITEMENT DU SIGNAL ET DES IMAGES GRETSI, XX, XX, 8 septembre 2003 (2003-09-08), pages 1-4, XP002277103**

**Description**

L'invention concerne un procédé de goniométrie multi-paramètres par séparation de l'incidence et des autres paramètres tels que la largeur de bande, les coefficients de couplage, la largeur du cône de diffusion ou encore la distance source-capteur.

Elle s'applique dans le domaine du traitement d'antennes, où sur un système de plusieurs capteurs sont reçus les signaux provenant d'un ou de plusieurs émetteurs (sources). Les sources sont reçues sous des angles d'incidences différents.

Dans un contexte électromagnétique, les capteurs sont des antennes et les sources émettent un signal radio-électrique polarisé. Dans un contexte acoustique les capteurs sont des microphones et les sources sont sonores.

Les capteurs du réseau reçoivent les sources avec une phase et une amplitude dépendant de leur angle d'incidence ainsi que de la position des antennes en bande étroite, front d'onde plan et sans perturbations sur les voies de réception et les capteurs du réseau.

Les techniques de traitement d'antennes actuellement connues ont pour objectif principal d'exploiter la diversité spatiale. Plus particulièrement, la goniométrie ou la localisation de sources a pour objectif d'estimer les angles d'incidences des émetteurs à partir d'un réseau de capteurs.

De façon nominale, les méthodes de goniométrie comme MUSIC [1] supposent que le front d'onde est plan, que les sources sont bande étroites, ponctuelles, sans diversité de polarisation, sans trajet cohérent et sans perturbation de la réponse du réseau de capteurs à une source. Lorsque l'une de ces hypothèses n'est pas vérifiée, la réponse du réseau de capteurs à une source ne dépend plus uniquement de l'incidence mais d'autre paramètres tels que la largeur de bande, les coefficients de couplage, la largeur du cône de diffusion ou encore la distance source-capteur.

L'art antérieur décrit différentes techniques permettant de compenser certaines de ces perturbations. L'estimation des paramètres secondaires (paramètres autres que l'incidence) n'est pas envisagée dans la plus-part des techniques à l'exception de la référence [2] pour la diversité de polarisation. Il existe ainsi des techniques qui adaptent des algorithmes de goniométrie aux sources diffuses [3][4][5]. Pour le contexte large bande, il existe des techniques de focalisation [6][7]

ou des techniques spatio-fréquentielles [8][9][10][11]. Pour les techniques de compensation des distorsions de la réponse du réseau la littérature est très riche [12][13] etc...

Dans l'état de l'art les techniques de compensation des distorsions de la réponse du réseau de capteurs traitent de façon isolée chacune des perturbations sans toutefois prendre en compte plusieurs perturbations à la fois. De telles techniques se révèlent donc insuffisantes, en particulier, dans de nombreuses applications acoustiques où l'onde est à la fois large-bande et est reçue en front d'onde courbe. Pour des sources radio-électriques, il est possible d'avoir un réseau d'antenne perturbé par le couplage avec des ondes en diversité de polarisation et des trajets cohérents.

Le document intitulé « Space frequency direction finding in wide-band and multipath contexts », A.Ferreol et al publié, IEEE, vol.5, 5 juin 2000 , pages 3113-3116 ne considère pas de manière générale plusieurs paramètres secondaires. Cet enseignement ne prend en compte que les paramètres d'intérêt tels que les DOA et les fréquences comme seul paramètre d'intérêt.

L'objet de la présente invention repose notamment sur une approche différente. L'idée consiste notamment à estimer de manière séparée le paramètre incidence et les autres paramètres dits paramètres secondaires.

L'objectif de ce brevet est donc de mettre en oeuvre un procédé pour réaliser une goniométrie des sources en présence de perturbations physiques rendant les techniques classiques non opérationnelles :

→ Goniométrie en azimut ou azimut-site avec un critère dépendant uniquement de la direction d'arrivée

→ Prise en compte d'une ou plusieurs perturbations physiques.

→ Estimation des paramètres secondaires liés à la perturbation.

L'invention concerne un procédé de goniométrie multi-paramètres de plusieurs sources dans un réseau de N capteurs, où chaque source dépend d'un angle d'arrivée (paramètre d'intérêt) ainsi que de plusieurs paramètres secondaires de peturbations du front d'onde, recevant un mélange linéaire de M sources de direction d'arrivée ou DOA ($\theta_m$ avec $1{\leq}m {\leq}M$), le vecteur d'observation correspondant aux signaux reçus sur les capteurs s'exprimant comme une combinaison linéaire des réponses au réseau de capteurs de chacun des émetteurs avec l'enveloppe complexe du signal du $m^{\text{ième}}$ émetteur **caractérisé en ce qu**'il comporte au moins les étapes suivantes :

o a) choisir un paramètre à déterminer ou paramètre d'intérêt,

o b) exprimer le vecteur directeur (ou réponse du réseau de capteurs à une source d'incidence θ et de vecteur de

nuisance $\Phi_0$) sous la forme d'une relation linéaire entre le paramètre d'intérêt choisi et les paramètres secondaires, $\mathbf{b_0}(\theta,\Phi_0) = U_0(\theta)\varphi(\Phi_0)$,

○ c) appliquer une étape de goniométrie de type MUSIC en factorisant le critère servant à la détermination des angles d'incidence ou paramètre d'intérêt afin de déterminer au moins le paramètre incidence, le critère utilisé dans la méthode MUSIC étant constitué du rapport des déterminants des matrices $Q_1(\theta) = U(\theta)^H \Pi_b U(\theta)$ et $Q_2(\theta) = U(\theta)^H U(\theta)$, où $\Pi_b$ est le projecteur bruit, et $U(\theta)$ le paramètre d'intérêt,

○ d) à partir de la valeur d'incidence, déterminer le vecteur représentatif des paramètres secondaires et exprimer ce vecteur sous la forme d'une relation linéaire entre un paramètre choisi à déterminer et les autres paramètres secondaires,

○ e) appliquer une étape de goniométrie de type MUSIC en factorisant le critère servant à la détermination du paramètre choisi,

○ f) réitérer les étapes d) à e) afin de déterminer la majorité ou l'ensemble des paramètres secondaires.

La méthode de goniométrie du procédé selon l'invention estime pour un faible coût numérique les incidences conjointement aux paramètres secondaires.

D'autres caractéristiques et avantages de la présente invention apparaîtront mieux à la lecture de la description qui suit d'un exemple de réalisation donné à titre illustratif et nullement limitatif annexé des figures qui représentent :

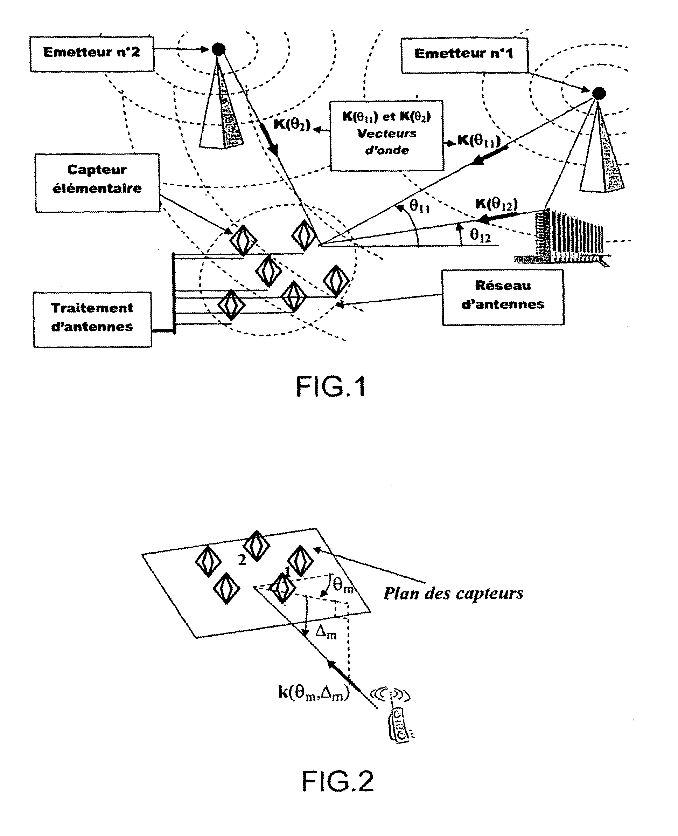

○ La figure 1 un exemple de système de traitement d'antennes,

○ La figure 2 une représentation des incidences d'une source,

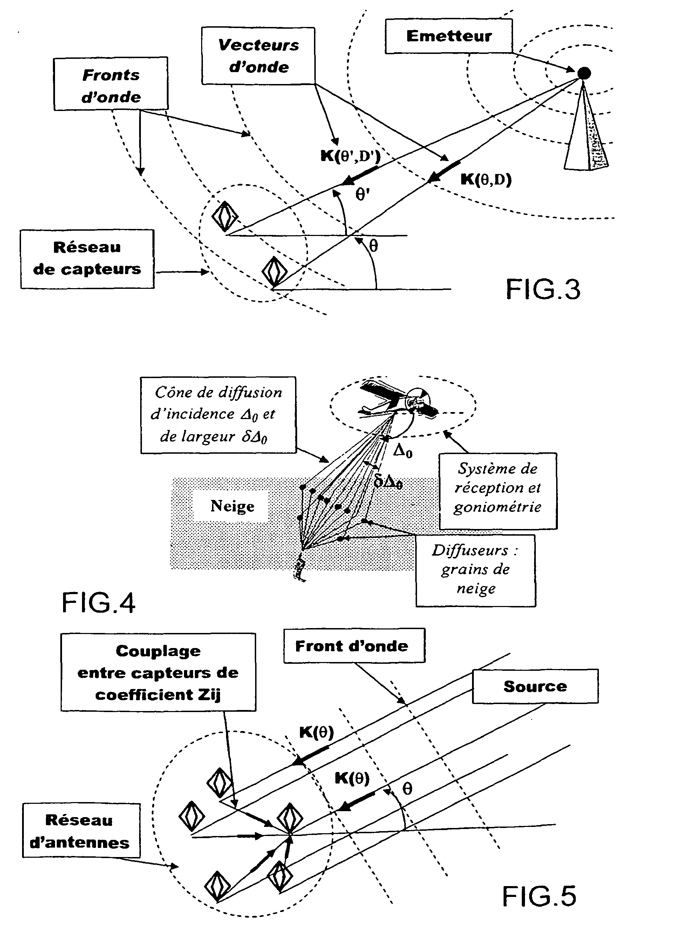

○ La figure 3 la schématisation d'un front d'onde non plan,

○ La figure 4 l'illustration d'une source émettant dans un cône de diffusion,

○ La figure 5 le schéma d'un couplage entre les capteurs d'un réseau,

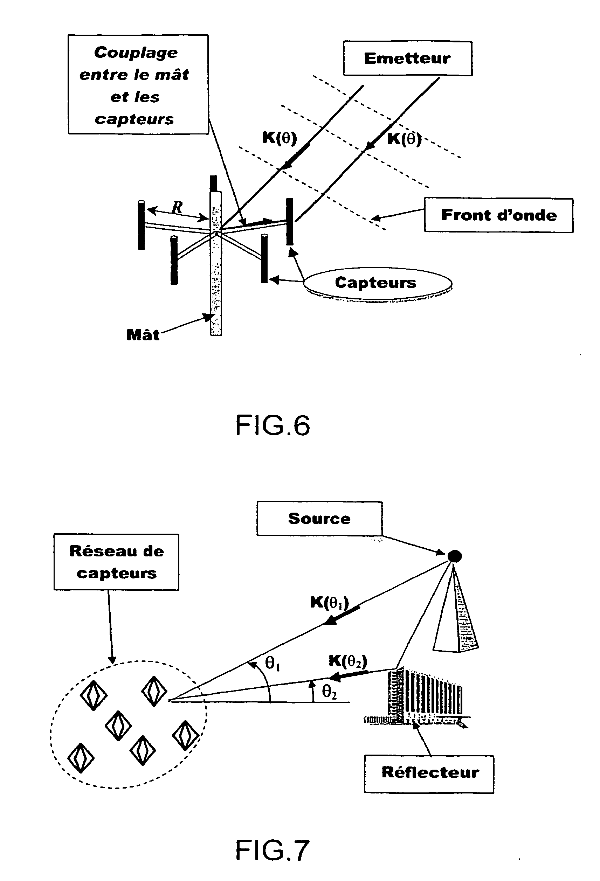

○ La figure 6 l'illustration du couplage des capteurs avec une structure,

○ La figure 7 le schéma de la propagation d'une source en multi-trajets,

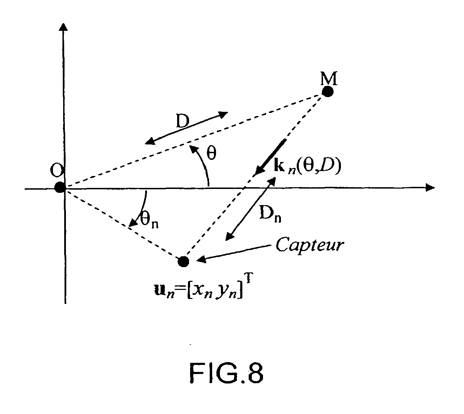

○ La figure 8 l'illustration du vecteur d'onde et du front d'onde.

Afin de mieux faire comprendre le principe mis en oeuvre dans le procédé, l'exemple qui suit est donné pour effectuer une goniométrie de signaux radioélectriques dans un réseau de capteurs.
La figure 1 schématise un système de traitement d'antennes composé par exemple d'un réseau 1 avec plusieurs capteurs Ci recevant des sources sous des angles différents. Le réseau d'antennes comporte par exemple N capteurs élémentaires en liaison avec un dispositif de traitement d'antennes 2. Sur la figure on a représenté 2 émetteurs. Les angles d'incidences peuvent être paramétrés soit en 1D en azimut $\theta_m$ ($\Delta_m=0$) soit en 2D en azimut $\theta_m$ et élévation $\Delta_m$. La figure 2 définit les paramètres azimut et élévation.
La description utilise indifféremment le mot source ou émetteur pour désigner un même élément.
Avant d'expliciter les étapes mises en oeuvre dans le procédé selon l'invention, quelques rappels sur les signaux sont donnés.

**Modèle et formulation du problème**

**x(t)** est le vecteur de dimension $N\times 1$ composé des enveloppes complexes des signaux reçus $x_n(t)$ ($1\leq n\leq N$) à la sortie des N capteurs. Chaque capteur reçoit un mélange des $M$ sources d'incidence $\theta_m$ ($1\leq m\leq M$). Sous ses hypothèses, le vecteur x(t) s'écrit :

$$\mathbf{x}(t)= \sum_{m=1}^{M} \mathbf{b}(\theta_m, \Phi_m)\, s_m(t) + \mathbf{n}(t) \qquad (1)$$

Où $\mathbf{b}(\theta, \Phi)$ est la réponse du réseau de capteurs à une source d'incidence 0 et de vecteur de nuisance $\Phi$, $s_m(t)$ est l'enveloppe complexe du signal du $m^{\text{ième}}$ émetteur d'incidence $\theta_m$ et de paramètre de nuisance $\Phi_m$ et finalement $\mathbf{n}(t)$ est le vecteur bruit.

Le vecteur $\Phi$ est composé des paramètres de nuisance tels que la bande fréquentielle des signaux, les coefficients de couplage du réseau, la largeur de cône des sources diffuses, la polarisation, etc... L'expression (1) peut se re-écrire de la manière suivante :

$$\mathbf{x}(t)=\mathbf{B}\,\mathbf{s}(t) + \mathbf{n}(t) \qquad (2)$$

Où :

$$\mathbf{B} =[\, \mathbf{b}(\theta_1, \Phi_1)\dots \mathbf{b}(\theta_M, \Phi_M)]\ \ \text{et}\ \ \mathbf{s}(t)=[\, s_1(t)\dots s_M(t)]^{\mathbf{T}} \qquad (3)$$

Où $(\dots)^T$ est l'opération de transposition d'un vecteur. Une méthode à sous-espace classique [1] reposant sur le modèle de l'équation (1) requière une estimation conjointe coûteuse de l'angle $\theta_m$ et du vecteur de nuisance $\Phi_m$ de chacune des sources. Un des objectifs du procédé est notamment de réduire la complexité à partir d'une modélisation particulière du vecteur directeur $\mathbf{b}(\theta, \Phi)$ (réponse du réseau de capteurs à une source d'incidence 0 et du vecteur de nuisance.

## PROCEDE DE LOCALISATION MULTI-PARAMETRES

### Factorisation du vecteur directeur

Le procédé selon l'invention comprend par exemple une première étape,
où le vecteur directeur représentatif de la réponse du réseau de capteurs à une source d'incidence $\theta$ et des paramètres de nuisance, s'exprime comme une relation linéaire entre un paramètre d'intérêt (paramètre que l'on cherche à déterminer dans un premier temps) et les paramètres dits secondaires. Par exemple, le vecteur directeur $\mathbf{b}(\theta, \Phi)$ est factorisé de la manière suivante :

$$\mathbf{b}(\theta, \Phi) =U(\theta)\, \gamma(\Phi) \qquad (4)$$

Où $\gamma(\Phi)$ est un vecteur fonction de $\Phi$.

Plus généralement l'idée est d'exprimer le vecteur directeur représentatif de la réponse du réseau de capteurs à une source d'incidence $\theta$ et des paramètres de nuisance, comme une relation linéaire entre un paramètre d'intérêt (paramètre que l'on cherche à détermine dans un premier temps) et les paramètres dits secondaires.
Dans l'exemple donné, le paramètre d'intérêt est l'incidence 0 et les autres paramètres secondaires sont regroupés dans le vecteur $\Phi$.

Le vecteur directeur étant factorisé, l'étape suivante consiste à réaliser une goniométrie. Dans le cas où le vecteur directeur $b(\theta, \Phi)$ se trouve déjà sous la forme d'une combinaison linéaire du paramètre incidence $U(\theta)$ et d'un vecteur $\gamma(\Phi)$ qui est un vecteur fonction des paramètres de nuisance, l'étape de goniométrie expliquée ci-après s'applique directement.

### Goniométrie sur les observations capteurs x(t)

Dans le cas général connu de l'Homme du métier, la méthode MUSIC [1] estime les $M$ minima $(\theta_m, \Phi_m)$ du critère normalisé suivant :

$$J(\theta, \Phi) = \frac{b(\theta,\Phi)^H \Pi_b\, b(\theta,\Phi)}{b(\theta,\Phi)^H\, b(\theta,\Phi)} \quad \text{avec} \quad 0 \leq J(\theta, \Phi) \leq 1 \qquad (5)$$

Où $(...)^H$ est l'opérateur de transposition et conjugaison et $\Pi_b = E_b E_b{}^H$ est le projecteur orthogonal à la base des vecteurs $b(\theta_m, \Phi_m)$ $(1 \leq m \leq M)$ et est engendré par les colonnes de la matrice $E_b = [\, c_{M+1} \ldots c_N\,]$ où $(\lambda_i, c_i)$ est la $i^{\text{ième}}$ valeur propre et vecteur propre à l'ordre 2 de la matrice de covariance $R_{xx} = E[\, x(t)\, x(t)^H]$ avec $\lambda_1 \geq \ldots \geq \lambda_k \geq \ldots \geq \lambda_N$. Dans la suite de la description, la matrice $E_b$ pourra être issue de l'espace bruit de la matrice $R_{yy} = E[\, f(x(t))\, f(x(t))^H]$ à l'ordre 2 ou bien de la quadricovariance de $x(t)$ (ou $f(x(t))$ à l'ordre 4. En insérant le modèle de $b(\theta, \Phi)$ de l'équation (4) dans (5) le critère de MUSIC devient :

$$J(\theta, \Phi) = \frac{\gamma(\Phi)^H Q_1(\theta)\, \gamma(\Phi)}{\gamma(\Phi)^H Q_2(\theta)\, \gamma(\Phi)} \qquad (6)$$

Où :

$$Q_1(\theta) = U(\theta)^H \Pi_b\, U(\theta) \quad \text{et} \quad Q_2(\theta) = U(\theta)^H\, U(\theta) \qquad (7)$$

En utilisant la théorie des formes quadratiques [14], le critère de l'équation (6) peut être réduit de la manière suivante en fonction de l'incidence $\theta$ :

$$J_{\min}(\theta) = \lambda^G_{\min}\{\, Q_1(\theta)\,,\, Q_2(\theta)\} \qquad (8)$$

Où $\lambda^G_i\{\, A\,,\, B\}$ est la $i^{\text{ième}}$ valeur propre généralisée des matrices carrés $A$ et $B$ où $\lambda^G_{\min}\{A\,,\, B\}$ est la valeur propre minimale. D'après la définition de $\lambda^G_i(\, A\,,\, B)$ on obtient aussi que :

$$J_{\min}(\theta) = \lambda_{min}\{\, Q_2(\theta)^{-1}\, Q_1(\theta)\,\} \qquad (9)$$

Où $\lambda_i\{\, A\,\}$ est la $i^{\text{ième}}$ valeur propre de la matrice carrés $A$ où $\lambda_{min}\{A\,\}$ est la valeur propre minimale. Sachant que $J(\theta_m, \Phi_m) = 0$, le critère (9) vérifie aussi $J_{\min}(\theta_m) = 0$ et peut être remplacé par :

$$J_{\det}(\theta) = \det(Q_2(\theta)^{-1}\, Q_1(\theta)) = \frac{\det(Q_1(\theta))}{\det(Q_2(\theta))} \qquad (10)$$

Finalement les $M$ incidences $\theta_m$ annulent le critère $J_{\det}(\theta)$. D'après (8) et (9) l'estimé $\hat{\gamma}_m$ du vecteur $\gamma(\Phi_m)$ associé à l'incidence $\theta_m$ est le vecteur propre généralisé associé à la valeur propre $\lambda^G_{\min}\{Q_1(\theta_m)\,,\, Q_2(\theta_m)\}$.

Lorsque pour certaines applications $\gamma(\Phi_m)$ vérifie $\gamma(\Phi_m) = \Phi_m$ ou $\gamma(\Phi_m) = [1\ \Phi_m]^T$, les vecteurs de paramètres $\Phi_m$ sont directement déduits des estimés $\hat{\gamma}_m$ des $\gamma(\Phi_m)$.

Pour les autres applications l'obtention des paramètres du vecteur $\Phi_m$ est obtenue en cherchant le vecteur qui annule le critère suivant :

$$C_m(\Phi) = \frac{\gamma(\Phi)^H \, \Pi_m \, \gamma(\Phi)}{\gamma(\Phi)^H \, \gamma(\Phi)} \quad \text{avec} \ \ \Pi_m = \ \mathbf{I} - \ \hat{\gamma}_m \, \hat{\gamma}_m{}^{\#} \tag{11}$$

Où $(.)^{\#}$ désigne la pseudo-inverse et I la matrice identité. L'équation (11) montre que la détermination de $\Phi_m$ nécessite l'optimisation d'un critère multi-dimensionnel suivant les composantes de $\Phi$. Pour réduire le coût de calcul le procédé suggère d'isoler un des paramètres de $\Phi$ pour ensuite modéliser $\gamma(\Phi)$ de la façon suivante :

$$\gamma(\Phi) = \mathbf{G}_1(\varphi) \, \gamma_1(\Phi') \quad \text{où} \ \ \Phi = [\varphi \ \Phi'^T]^T \tag{12}$$

Il sera donné des exemples du modèle de l'équation (12) dans la suite de la description. Sachant que $C_m(\Phi_m)=0$ et en utilisant les résultats des équations (6) à (10), le critère de l'équation (11) se réduit de la façon suivante en $\varphi$ (composante du vecteur $\Phi$) :

$$C_{m\text{-dct}}(\varphi) = \frac{\det(\mathbf{Q}_{m1}(\varphi))}{\det(\mathbf{Q}_{m2}(\varphi))} \tag{13}$$

Avec :

$$\mathbf{Q}_{m1}(\varphi) = \mathbf{G}_1(\varphi)^H \, \Pi_m \, \mathbf{G}_1(\varphi) \ \text{et} \ \ \mathbf{Q}_{m2}(\varphi) = \mathbf{G}_1(\varphi)^H \, \mathbf{G}_1(\varphi) \tag{14}$$

La première composante $\varphi_m$ du vecteur de paramètres $\Phi_m$ est estimée en cherchant le minimum du critère $C_{m\text{-dct}}(\varphi)$. Comme précédemment le vecteur $\gamma_1(\Phi_m')$ associé au paramètre $\varphi_m$ est le vecteur propre généralisé associé à la valeur propre $\lambda_{\min}^G \, \{\mathbf{Q}_{m1}(\varphi_m) \, , \, \mathbf{Q}_{m2}(\varphi_m)\}$.

Pour estimer les paramètres restant des vecteurs $\Phi_m'$ contenus dans les vecteurs $\Phi_m = [\varphi_m \, \Phi_m{}^T]^T$, les opérations des équations (11) à (14) peuvent être réitérées de façon successive afin de réaliser à chaque fois une optimisation de critère mono-paramètre.

### Goniométrie sur une transformation du vecteur x(t)

Les méthodes de goniométrie utilisant la matrice de covariance des observations $\mathbf{R}_{xx}=\mathrm{E}[\,\mathbf{x}(t)\,\mathbf{x}(t)^{\,H}]$ permettent de réaliser la goniométrie jusqu'à $N$-1 sources lorsque le vecteur observation $\mathbf{x}(t)$ est de dimension $N\times 1$. Afin de pouvoir estimer les incidences de plus de sources, il est nécessaire de constituer un vecteur observation $\mathbf{y}(t)=f(\mathbf{x}(t))$ de dimension plus grande que $\mathbf{x}(t)$. En particulier, le procédé comporte une étape de transformation spatio-temporelle :

$$\mathbf{y}(t) = f(\mathbf{x}(t)) = \begin{bmatrix} \mathbf{x}(t) \\ \vdots \\ \mathbf{x}(t-L+1) \end{bmatrix} \tag{15}$$

Ceci revient à augmenter de manière virtuelle le nombre de capteurs et le nombre de sources en respectant le fait que le ratio nombre de capteurs/nombre de sources soit inférieur au ratio nombre de capteurs réels/nombre de sources réelles.

Le terme $L$ est le facteur d'accroissement du nombre de capteurs virtuels en spatio-temporel. Les capteurs virtuels associés à l'observation $\mathbf{x}(t-\tau)$ sont les capteurs réels placé derrière des lignes à retard de retard $\tau$.

Il faut noter qu'en présence de $M$ porteuses de signal $s_m(t)=\exp(\mathrm{j}2\pi f_m t)$ le rang de la matrice de covariance

$\mathbf{R}_{yy}$=E[ $\mathbf{y}(t)$ $\mathbf{y}(t)$ $^H$] vaut $M$. En conséquence, le vecteur observation $\mathbf{y}(t)$ permet d'effectuer une goniométrie jusqu'à $NL$-1 porteuses. Lorsque les sources ont une bande plus large qu'une porteuse, le rang de $\mathbf{R}_{yy}$ n'est plus supérieur à $M$ et la goniométrie peut localiser moins que $NL$-1 sources. Sans hypothèse particulière sur la largeur de bande des signaux incidents la méthode décrite précédemment peut être appliquée sur la matrice de covariance $\mathbf{R}_{yy}$ en remplaçant la matrice U($\theta$) de l'équation (4) par la matrice $U_L(\theta)$ suivante :

$$U_L(\theta)=\begin{bmatrix} \mathbf{U}(\theta) & \cdots & \mathbf{0} \\ \vdots & \ddots & \vdots \\ \mathbf{0} & \cdots & \mathbf{U}(\theta) \end{bmatrix} \qquad (16)$$

La matrice $U_L(\theta)$ est de dimension $NL{\times}PL$ lorsque la matrice U($\theta$) est de dimension $N{\times}P$. L'espace signal de $\mathbf{R}_{yy}$ est engendré par des vecteurs $\mathbf{e}_{mk} = U_L(\theta_m) \gamma_L(\Phi_m,\alpha_{mk})$
où :

$$\gamma_L(\Phi,\alpha)=\alpha\otimes\gamma(\Phi) \qquad (17)$$

Où $\alpha$ est un vecteur de dimension $L$x1 et $\otimes$ désigne le produit de Kronecker. Afin d'exploiter la non circularité des signaux il peut être constitué le vecteur observation suivant :

$$\mathbf{y}(t)=f(\mathbf{x}(t))=\begin{bmatrix} \mathbf{x}(t) \\ \mathbf{x}(t)*\exp(j2\pi\beta\,t) \end{bmatrix} \qquad (18)$$

En présence de $M$ BPSK de fréquence centrale $-\beta/2$ (connu par l'homme du métier dans le domaine des télécommunications) le rang de la matrice de covariance $\mathbf{R}_{yy}$ vaut $M$ et ainsi le vecteur $\mathbf{y}(t)$ permet de goniométrer jusqu'à $2N$-1 BPSK. Sans hypothèse particulière sur la circularité des signaux incidents la méthode décrite dans le paragraphe de la goniométrie sur les observations capteurs x(t) peut être appliquée sur la matrice de covariance $\mathbf{R}_{yy}$ en remplaçant la matrice U($\theta$) de l'équation (4) par la matrice $U_C(\theta)$ suivante :

$$U_C(\theta)=\begin{bmatrix} \mathbf{U}(\theta) & \mathbf{0} \\ \mathbf{0} & \mathbf{U}(\theta)* \end{bmatrix} \qquad (19)$$

L'espace signal de $\mathbf{R}_{yy}$ est engendré par des vecteurs $\mathbf{c}_{mk} = U_C(\theta_m) \gamma_C(\Phi_m,\alpha_{mk})$ où :

$$\gamma_C(\Phi,\alpha)=\alpha\otimes\begin{bmatrix} \gamma(\Phi) \\ \gamma(\Phi)* \end{bmatrix} \qquad (20)$$

Où $\alpha$ est un vecteur de dimension 2x1. Pour exploiter conjointement la largeur de bande des signaux avec leur non circularité, il faut construire le vecteur observation suivant :

$$\mathbf{y}(t) = f(\mathbf{x}(t)) = \begin{bmatrix} \mathbf{y}_L(t) \\ \mathbf{y}_L(t) * \exp(j2\pi\beta t) \end{bmatrix} \quad \text{avec} \quad \mathbf{y}_L(t) = \begin{bmatrix} \mathbf{x}(t) \\ \vdots \\ \mathbf{x}(t - L + 1) \end{bmatrix} \qquad (21)$$

Sans hypothèse particulière sur la circularité et la largeur de bande des signaux incidents la méthode décrite dans le paragraphe sur la goniométrie sur les observations capteurs $\mathbf{x}$(t) peut être appliquée sur la matrice de covariance $\mathbf{R}_{yy}$ en remplaçant la matrice U($\theta$) de l'équation (4) par la matrice U$_{LC}$($\theta$) suivante :

$$U_{LC}(\theta) = \begin{bmatrix} \mathbf{U}_L(\theta) & \mathbf{0} \\ \mathbf{0} & \mathbf{U}_L(\theta)* \end{bmatrix} \qquad (22)$$

L'espace signal de $\mathbf{R}_{yy}$ est engendré par des vecteurs $\mathbf{c}_{mk} = U_{LC}(\theta_m)\, \gamma_{LC}(\Phi_m, \alpha_{mk})$ où :

$$\gamma_{LC}(\Phi, \alpha) = \begin{bmatrix} \boldsymbol{\alpha}_1 \otimes \boldsymbol{\gamma}(\boldsymbol{\Phi}) \\ \boldsymbol{\alpha}_2 \otimes \boldsymbol{\gamma}(\boldsymbol{\Phi})* \end{bmatrix} \text{ avec } \alpha = \begin{bmatrix} \boldsymbol{\alpha}_1 \\ \boldsymbol{\alpha}_2 \end{bmatrix} \qquad (23)$$

Où $\alpha$ est un vecteur de dimension 2$L$x1.

En présence de signaux cyclo-stationnaires, le vecteur observation suivant peut être constitué:

$$\mathbf{y}(t) = f(\mathbf{x}(t)) = \begin{bmatrix} \mathbf{x}(t) \\ \mathbf{x}(t-1)\exp(j2\pi\alpha t) \\ \vdots \\ \mathbf{x}(t-L+1)\exp(j2\pi\alpha(L-1)t) \end{bmatrix} \qquad (24)$$

Sans hypothèse particulière sur la cyclo-stationnarité des signaux incidents la méthode décrite dans le paragraphe sur la goniométrie sur les observations capteurs x(t) peut être appliquée sur la matrice de covariance $\mathbf{R}_{yy}$ en remplaçant la matrice U($\theta$) de l'équation (4) par la matrice U$_L$($\theta$) de l'équation (16).

Pour exploiter conjointement la cyclo-stationnarité et la non circularité des signaux, il peut être construit le vecteur observation suivant :

$$\mathbf{y}(t) = f(\mathbf{x}(t)) = \begin{bmatrix} \mathbf{y}_L^{\alpha}(t) \\ \mathbf{y}_L^{\alpha}(t) * \exp(j2\pi\beta t) \end{bmatrix}$$

avec

$$\mathbf{y}_L{}^{\alpha}(t)= \begin{bmatrix} \mathbf{x}(t) \\ \mathbf{x}(t-1)\exp(j2\pi\alpha t) \\ \vdots \\ \mathbf{x}(t-L+1)\exp(j2\pi\alpha(L-1)t) \end{bmatrix} \qquad (25)$$

Sans hypothèse particulière sur la circularité et la cyclo-stationnarité des signaux incidents la méthode décrite dans le paragraphe sur la goniométrie sur les observations capteurs x(t) peut être appliquée sur la matrice de covariance $\mathbf{R}_{yy}$ en remplaçant la matrice U(θ) de l'équation (4) par la matrice $U_{LC}$(θ) de l'équation (22).

Les méthodes ci-dessus transforment le vecteur $\mathbf{x}(t)$ en un vecteur $\mathbf{y}(t)$ allongé pour appliquer une méthode de goniométrie utilisant les statistiques d'ordre 2 de $\mathbf{y}(t)$ avec $\mathbf{R}_{yy}$=E[$\mathbf{y}(t)\,\mathbf{y}(t)^H$]. De cette matrice il est extrait le projecteur bruit $\Pi_b$ de l'équation (5).

Pour accroître la capacité du réseau de capteurs en nombre de sources, il peut être appliqué sur le vecteur $\mathbf{y}(t)$ de dimension $N'$x1 les statistiques d'ordre supérieur. Le cas où $\mathbf{y}(t)=\mathbf{x}(t)$ est aussi envisagé pour la suite de la description. En particulier à l'ordre 4, la méthode de goniométrie peut être appliquée sur la matrice de quadricovariance suivante :

$$\mathbf{Q}_{yy}(I,J) = \mathrm{cum}(y_i(t),\, y_j(t)^*,\, y_k(t)^*,\, y_l(t)) \qquad (26)$$

Où $y_i(t)$ est la $i^{\text{ème}}$ composante de $\mathbf{y}(t)$ et

$$I = N(i-1)+j \quad \text{et} \quad J = N(k-1)+l \qquad (27)$$

Où cum($x,y,z,w$) désigne l'intercumulant des variables aléatoires $x$, $y$, $z$ et $w$. En présence de $M$ signaux le vecteur observation $\mathbf{y}(t)$ peut s'écrire comme le signal $\mathbf{x}(t)$ de l'équation (1) avec des vecteurs directeurs $\mathbf{b}_y(\theta_m, \Phi_{mi})=U_y(\theta_m)\,\gamma_y(\Phi_{mi})$ de dimension plus grande ou égale ($\mathbf{y}(t)=\mathbf{x}(t)$) que $\mathbf{b}(\theta_m, \Phi_m)$. Dans ces conditions $\mathbf{y}(t)$ s'écrit :

$$\mathbf{y}(t)= \sum_{m=1}^{M}\sum_{i=1}^{I} \mathbf{b}_y(\theta_m, \Phi_{mi})\, s_{mi}(t) + \mathbf{n}(t) \qquad (28)$$

En présence de signaux statistiquement indépendants la matrice de l'équation (26) s'écrit:

$$\mathbf{Q}_{yy} = \sum_{m=1}^{M}\sum_{i=1}^{I} \mathbf{b}_y(\theta_m, \Phi_{mi})^{\otimes 2}\, \mathbf{b}_y(\theta_m, \Phi_{mi})^{\otimes 2H}\, \delta_{mi} \quad \text{où} \quad \mathbf{u}^{\otimes 2}= \mathbf{u}\otimes\mathbf{u} \qquad (29)$$

avec $\delta_{mi} = \mathrm{cum}(s_{mi}(t),\, s_{mi}(t)^*,\, s_{mi}(t)^*,\, s_{mi}(t))$. Sachant que la matrice de covariance $\mathbf{R}_{xx}$=E[ $\mathbf{x}(t)\,\mathbf{x}(t)^H$] utilisé dans (0.0) s'écrit :

$$\mathbf{R}_{xx} = \sum_{m=1}^{M} \mathbf{b}(\theta_m, \Phi_m)\, \mathbf{b}(\theta_m, \Phi_m)^H\, p_m + \sigma^2\mathbf{I} \qquad (30)$$

avec $p_m = $ E[$|s_m(t)|^2$], l'application de la goniométrie sur $\mathbf{Q}_{yy}$ se fait avec le vecteur directeur $\mathbf{b}_y(\theta_m, \Phi_{mi})^{\otimes 2}$ au lieu de $\mathbf{b}$

(θ, Φ)) pour $\mathbf{R}_{xx}$. La méthode MUSIC à l'ordre 4 estime les *MxI* minima (θ_m, Φ_{mi}) du critère normalisé suivant :

$$J(\theta, \Phi) = \frac{\mathbf{b}_y(\theta, \Phi)^{\otimes 2^H} \Pi_{b4} \, \mathbf{b}_y(\theta, \Phi)^{\otimes 2}}{\mathbf{b}_y(\theta, \Phi)^{\otimes 2^H} \mathbf{b}_y(\theta, \Phi)^{\otimes 2}} \quad \text{avec} \quad 0 \le J(\theta, \Phi) \le 1 \qquad (31)$$

Où $\Pi_{b4} = \mathbf{E}_b \mathbf{E}_b^H$ est le projecteur orthogonal à la base des vecteurs $\mathbf{b}_y(\theta_m, \Phi_{mi})^{\otimes 2}$ ($1 \le m \le M$) et est engendré par les colonnes de la matrice $\mathbf{E}_b = [\, \mathbf{c}_{MI+1} \, ... \, \mathbf{c}_{N^2}]$ où $(\lambda_i, \mathbf{c}_i)$ est la $i^{ème}$ valeur propre et vecteur propre de la quadri-covariance $\mathbf{Q}_{yy}$ avec $\lambda_1 \ge ... \ge \lambda_k \ge ... \ge \lambda_{N^2}$. Sachant que $\mathbf{b}_y(\theta, \Phi) = U_y(\theta) \, \gamma_y(\Phi)$, on en déduit que :

$$\mathbf{b}_y(\theta, \Phi)^{\otimes 2} = U_y(\theta)^{\otimes 2} \, \gamma_y(\Phi)^{\otimes 2} \qquad (32)$$

En conséquence, la méthode de goniométrie du paragraphe sur la goniométrie sur les observations capteurs $\mathbf{x}(t)$ est applicable sur la matrice $\mathbf{Q}_{yy}$ au lieu de $\mathbf{R}_{xx}$. Cette remarque montre qu'il est possible d'étendre la méthode MUSIC à l'ordre 4 en présence de sources large bande, de sources diffuses où encore avec un réseau de capteurs perturbé par des phénomènes de couplage.

## MODELISATION AD-HOC DES DIVERSES APPLICATIONS PHYSIQUES

Le procédé selon l'invention peut s'appliquer dans différents cas d'applications dont les suivantes :

Modélisation directe

- **Cas de la diversité de polarisation [2] :** En présence d'une source Bande étroite à diversité de polarisation le vecteur $\mathbf{b}(\theta, \Phi)$ de l'équation (4) s'écrit :

$$\mathbf{b}(\theta, \Phi) = P_H \, \mathbf{a}(\theta)^1 + P_V \, \mathbf{a}(\theta)^2 = U(\theta) \, \Phi \qquad (33)$$

Où $\Phi = [\, P_H \, P_V]^T$ est le vecteur composé des deux composantes de la polarisation. La matrice $\mathbf{U}(\theta) = [\, \mathbf{a}(\theta)^1 \, \mathbf{a}(\theta)^2]$ est composé des réponses $\mathbf{a}(\theta)^1$ et $\mathbf{a}(\theta)^2$ du réseau de capteurs à respectivement la 1$^{ière}$ et la seconde polarisation.

- **Cas perturbations sur les capteurs (Figures 5 et 6)** : Dans un contexte d'autocalibration [13] le paramètre Φ caractérise les erreurs de modèle sur les antennes. En particulier en présence d'une source Bande étroite reçue sur un front d'onde plan dans le cas de couplage mutuel [15][16][17] le vecteur $\mathbf{b}(\theta, \Phi)$ s'écrit :

$$\mathbf{b}(\theta, \Phi) = \mathbf{Z} \, \mathbf{a}(\theta) \qquad (34)$$

Où $\mathbf{Z}$ est la matrice de couplage et $\mathbf{a}(\theta) = [\, a_1(\theta) \, ... \, a_N(\theta)]^T$ est le vecteur directeur géométrique en front d'onde plan où :

$$a_n(\theta) = \exp(-j2\pi \, \frac{f}{c} \, (\mathbf{k}(\theta)^T \, \mathbf{u}_n) \,) \qquad (35)$$

Où $\mathbf{k}(\theta)$ est le vecteur d'onde présenté sur la figure-2 , $\mathbf{u}_n = [x_n \, y_n \, z_n]$ est le vecteur position du $n^{ième}$ capteur, $f$ la fréquence centrale de la source bande étroite et $c$ la vitesse de propagation de l'onde. Le vecteur d'onde

vérifie toujours $|\mathbf{k}(\theta)|=1$ et vaut $\mathbf{k}(\theta)=[-\cos(\theta)\ -\sin(\theta)]^T$ lorsque l'onde se propage dans le plan horizontal d'après la figure-3.

Dans le cas particulier du réseau circulaire de la figure-7, la matrice de couplage dépend des 3 paramètres $\alpha$, $\beta$ et $\gamma$ où $\alpha$ est le coefficient de couplage entre le $n^{\text{ième}}$ et le $(n+1)^{\text{ième}}$ capteur , $\beta$ est le coefficient de couplage entre le $n^{\text{ième}}$ et le $(n+2)^{\text{ième}}$ capteur et $\gamma$ est le coefficient de couplage entre les capteurs et le mât centrale. Dans ces conditions la matrice de couplage $\mathbf{Z}(\alpha,\beta,\gamma)$ s'écrit :

$$\mathbf{Z}(\alpha,\beta,\gamma) = \begin{bmatrix} 1 & \alpha & \beta & \beta & \alpha & \gamma \\ \alpha & 1 & \alpha & \beta & \beta & \gamma \\ \beta & \alpha & 1 & \alpha & \beta & \gamma \\ \beta & \beta & \alpha & 1 & \alpha & \gamma \\ \alpha & \beta & \beta & \alpha & 1 & \gamma \end{bmatrix} \qquad (36)$$

Utilisant (34) et (36), le vecteur $\mathbf{b}(\theta,\Phi)$ peut s'écrire :

$$\mathbf{b}(\theta,\ \Phi) = \mathbf{Z}(\alpha,\beta,\gamma)\ \mathbf{a}(\theta) = \mathbf{U}(\theta)\ \Phi \qquad (37)$$

Avec :

$$\mathbf{U}(\theta) = \begin{bmatrix} a_1(\theta) & a_2(\theta)+a_5(\theta) & a_3(\theta)+a_4(\theta) & a_{mat}(\theta) \\ a_2(\theta) & a_3(\theta)+a_1(\theta) & a_4(\theta)+a_5(\theta) & a_{mat}(\theta) \\ a_3(\theta) & a_4(\theta)+a_2(\theta) & a_5(\theta)+a_1(\theta) & a_{mat}(\theta) \\ a_4(\theta) & a_5(\theta)+a_3(\theta) & a_1(\theta)+a_2(\theta) & a_{mat}(\theta) \\ a_5(\theta) & a_1(\theta)+a_4(\theta) & a_2(\theta)+a_3(\theta) & a_{mat}(\theta) \end{bmatrix} \text{ et } \Phi = \begin{bmatrix} 1 \\ \alpha \\ \beta \\ \gamma \end{bmatrix} \qquad (38)$$

Sachant que $a_{mat}(\theta) = \exp(j2\pi\ (f/c)\ (\mathbf{k}(\theta)^T\ \mathbf{u}_{mat}))$ où $\mathbf{u}_{mat} = [0\ 0\ 0]^T$ est le vecteur de position du mât. D'un point de vue plus général le vecteur $\Phi$ dépend des coefficients de couplage entre les capteurs.

• **Cas de multi-trajets cohérents (Figure 7)** : En présence de multi-trajets cohérents le modèle de l'équation (1) devient :

$$\mathbf{x}(t) = \sum_{m=1}^{M}\ \mathbf{b}(\underline{\theta}_m,\ \Phi_m)\ s_m(t) + \mathbf{n}(t) \qquad (39)$$

Où:

$$\mathbf{b}(\underline{\theta}_m,\ \Phi_m) = \sum_{p=1}^{P}\ \rho_{mp}\ \mathbf{a}(\theta_{mp}) \qquad (40)$$

Où $\underline{\theta}_m = [\ \theta_{m1}\ ...\ \theta_{mP}]^T$ est le vecteur composé des incidences des multi-trajets et $\Phi_m = [\ \rho_{mp}\ ...\ \rho_{mP}]^T$ est le vecteur des atténuations. Le vecteur $\mathbf{b}(\theta_m,\ \Phi_m)$ peut s'écrire directement comme celui de l'équation (4) où :

$$\mathbf{b}(\underline{\theta}_m, \Phi_m)= U(\underline{\theta}_m)\ \Phi_m \quad \text{avec}\quad U(\underline{\theta}_m)=[\ \mathbf{a}(\theta_{m1})\ \dots\ \mathbf{a}(\theta_{mP})] \qquad (41)$$

Où $\mathbf{a}(\theta)$ est la réponse du réseau de capteur à une source bande étroite reçue en front d'onde plan avec une incidence $\theta$. Dans ce cas le critère $\mathbf{J}_{\text{det}}(\theta)$ dépend du vecteur $\theta=[\ \theta_1\ \dots\ \theta_P]$ des incidences des $P$ multi-trajets cohérents. Il faut remarquer que l'application directe de MUSIC avec le vecteur directeur $\mathbf{a}(\theta)$ ne permet pas de déterminer l'incidence des multi-trajets cohérents.

**Modélisation en utilisant un développement limité**

Dans d'autre type de contexte tel que les sources en front d'onde courbe, large bande ou diffuse, le vecteur directeur ne peut pas se modéliser directement sous la forme $\mathbf{b}(\theta, \Phi) = U(\theta)\ \gamma(\Phi)$. Pour revenir à cette modélisation le procédé propose de réaliser un Développement Limité (DL) autour d'un paramètre constant $\Phi=\Phi_0$. En particulier en présence de front d'onde courbe, le vecteur directeur sera développé autour du vecteur en front d'onde plan c'est à dire en $\Phi_0=1/D=0$ ($D$ : Distance de la source). En présence de source large bande le développement se fera autour de $\Phi_0=f_0$ ($f_0$ : fréquence centrale de la bande de signal reçues).
Ainsi en présence d'un vecteur de paramétres $\Phi$ scalaire, le Développement Limité (DL) d'ordre $L$ de $\mathbf{b}(\theta, \Phi)$ autour de $\Phi=\Phi_0$ donne :

$$\mathbf{b}(\theta, \Phi) = \mathbf{b}(\theta,\Phi_0) + \sum_{i=1}^{L}\ \mathbf{b}^{(i)}(\theta,\Phi_0)\ \frac{(\Phi - \Phi_0)^i}{i!} =U(\theta)\ \varphi(\Phi) \qquad (42)$$

Où:

$$U(\theta) =[\ \mathbf{b}(\theta,\Phi_0)\ \mathbf{b}^{(1)}(\theta,\Phi_0)\ \dots\ \mathbf{b}^{(L)}(\theta,\Phi_0)]\quad \text{et}\quad \eta(\Phi,\Phi_0)=\begin{bmatrix} 1 \\ \Phi - \Phi_0 \\ \vdots \\ \dfrac{(\Phi - \Phi_0)^L}{L!} \end{bmatrix} \qquad (43)$$

Où $\mathbf{b}^{(i)}(\theta,\Phi_0)$ est la dérivée $i^{\text{ème}}$ de $\mathbf{b}(\theta, \Phi)$ en $\Phi=\Phi_0$. En présence de plusieurs paramètres physiques, le vecteur $\Phi$ a plusieurs composantes et l'on exécute les développements limités suivant chacune des composantes autour de $\Phi=\Phi_0$. En présence d'un vecteur $\Phi=[\Phi_1\ \dots\Phi_K]^T$ composé de $K$ composantes, il faut commencer par réaliser un DL d'ordre $L$ de $\mathbf{b}(\theta, \Phi)$ suivant le paramètre $\Phi_1$ en $\Phi_1=\Phi_{01}$ pour obtenir :

$$\mathbf{b}(\theta, \Phi) = U_1(\theta, \Phi^1)\ \varphi(\Phi_1)\ \text{où}\ \Phi^1=[\Phi_2\dots\Phi_K]^T \qquad (44)$$

Où:

$$U_1(\theta,\Phi^1) =[\ \mathbf{u}_1^{(0)}(\theta, \Phi^1)\ \mathbf{u}_1^{(1)}(\theta, \Phi^1)\ \dots\ \mathbf{u}_1^{(L)}(\theta, \Phi^1)]$$

et

$$\eta(\Phi_1,\Phi_{01})=\begin{bmatrix} 1 \\ \Phi_1 - \Phi_{01} \\ \vdots \\ \dfrac{(\Phi_1 - \Phi_{01})^L}{L!} \end{bmatrix} \qquad (45)$$

Où $\mathbf{u}_1^{(i)}(\theta, \Phi^1)$ est la dérivée partielle $i^{\text{ème}}$ de $\mathbf{b}(\theta, \Phi)$ par rapport à $\Phi_1$ en $\Phi_1=\Phi_{01}$. En réalisant un DL à l'ordre $L$ des colonnes de $\mathbf{U}_1(\theta,\Phi^1)$ suivant le paramètre $\Phi_2$ en $\Phi_2=\Phi_{02}$ on obtient :

$$\mathbf{u_1}^{(i)}(\theta, \Phi^1) = U_2^{(i)}(\theta, \Phi^2)\, \eta(\Phi_2,\Phi_{02}) \quad \text{où} \quad \Phi^2=[\Phi_3 \ldots \Phi_K]^T \qquad (46)$$

En reportant (45) (46) dans (44) on obtient :

$$\mathbf{b}(\theta, \Phi) = U_2(\theta, \Phi^2)\, \eta(\Phi_1,\Phi_{01}) \otimes \eta(\Phi_2,\Phi_{02}) \quad \text{où} \quad \Phi^2=[\Phi_3 \ldots \Phi_K]^T \qquad (47)$$

Où les colonnes de $U_K(\theta)$ sont composées de toutes les dérivées partielles de $\mathbf{b}(\theta, \Phi)$ par rapport aux composantes du vecteur $\Phi$ en $\Phi=\Phi_0$. En final on obtient bien le modèle $\mathbf{b}(\theta, \Phi)=\mathbf{U}(\theta)\, \varphi(\Phi)$ avec :

$$\mathbf{b}(\theta, \Phi) = U_K(\theta)\, [\eta(\Phi_1,\Phi_{01}) \otimes \ldots \otimes \eta(\Phi_K,\Phi_{0K})] \qquad (48)$$

Où les colonnes de $U_K(\theta)$ sont composées de toutes les dérivées partielles de $\mathbf{b}(\theta, \Phi)$ par rapport aux composantes du vecteur $\Phi$ en $\Phi=\Phi_0$. En final on obtient bien le modèle $\mathbf{b}(\theta, \Phi)=\mathbf{U}(\theta)\, \varphi(\Phi)$ avec :

$$U(\theta) = U_K(\theta) \quad \text{et} \quad \varphi(\Phi)=\eta(\Phi_1,\Phi_{01}) \otimes \ldots \otimes \eta(\Phi_K,\Phi_{0K}) \qquad (49)$$

Dans l'exemple explicité les développements limités sur chacune des composantes de $\Phi$ sont à l'ordre $L$. Sans sortir du cadre de l'invention, il est facile d'étendre la description avec des DL dont l'ordre est différent pour chacun des paramètres $\Phi_{0k}$.

- **Cas des sources en champ proche illustré (figures 3 et 8)**: Lorsque la source est reçue sur un front d'onde courbe le vecteur d'onde k dépend non seulement de l'incidence $\theta$ de la source mais aussi de sa distance $D$ et de la position du capteur sur laquelle est reçu la source. On note ainsi $\mathbf{k}_n(\theta,D)$ le vecteur d'onde reçu sur le $n^{\text{ème}}$ capteur. Sur la figure suivante est représenté le vecteur d'onde par rapport à la source au point M et la position $\mathbf{u}_n$ du $n^{\text{ème}}$ capteur.
En hypothèse bande étroite la réponse géométrique du $n^{\text{ème}}$ capteur à une source d'incidence $\theta$ situé à une distance $D$ s'écrit :

$$a_n(\theta,D) = \exp(-j2\pi\, \frac{f}{c}\, (\mathbf{k}_n(\theta,D)^T\, \mathbf{u}_n)\,)\, \frac{c}{D_n\, f} \qquad (50)$$

Et la réponse du réseau de capteurs s'écrit :

$$\mathbf{b}(\theta, \Phi) = \begin{bmatrix} a_1(\theta,1/\Phi) \\ \vdots \\ a_N(\theta,1/\Phi) \end{bmatrix} \text{ avec } \Phi=1/D \tag{51}$$

Pour transformer $\mathbf{b}(\theta, \Phi)$ en $\mathbf{U}(\theta)\,\varphi(\Phi)$ le procédé suggère de réaliser un DL de $\mathbf{b}(\theta, \Phi)$ autour de $\Phi_0=0$. En effet $\mathbf{b}(\theta, \Phi=0)$ est la réponse du réseau de capteurs en hypothèse de front d'onde plan.

- **Cas des sources bandes étroites reçues sur une large bande de réception** :
  Dans ce cas le modèle de l'équation (1) devient :

$$\mathbf{x}(t)=\sum_{m=1}^{M} \mathbf{a}(\theta_m, f_m)\, s_m(t) + \mathbf{n}(t) \tag{52}$$

Où le $m^{\text{ième}}$ source émet autour de la fréquence $f_m$ et où le vecteur $\mathbf{a}(\theta, f)$ s'écrit en front d'onde plan:

$$\mathbf{a}(\theta, f)=\begin{bmatrix} a_1(\theta, f) \\ \vdots \\ a_N(\theta, f) \end{bmatrix} \text{ avec } a_n(\theta, f)=\exp(-j2\pi\,\frac{f}{c}\,(\mathbf{k}(\theta)^{\mathbf{T}}\,\mathbf{u}_n)) \tag{53}$$

Après un DL de $\mathbf{a}(0, f)$ autour de la fréquence centrale $f=f_0$, le vecteur $\mathbf{a}(\theta, f)$ s'écrit :

$$\mathbf{a}(\theta, f)= \mathbf{U}_{f0}(\theta)\,\varphi_{f0}(f) \tag{54}$$

On obtient ainsi le modèle de l'équation (4).

- **Cas des sources large bande** : En présence de sources large bande le modèle de l'équation (1) devient :

$$\mathbf{x}(t)=\sum_{m=1}^{M} \sum_{k=1}^{K_m} \mathbf{a}(\theta_m, f_{mk})\, s_m(t, f_{mk}) + \mathbf{n}(t) \tag{55}$$

Où le signal de la $m^{\text{ième}}$ source se décompose en $K_m$ sources bande étroite d'amplitude complexe $s_m(t, f_{mk})$. D'après (55), il existe $K_m$ vecteurs directeurs associés à la source d'incidence $\theta_m$. Ces vecteurs ont l'expression suivante :

$$\mathbf{b}(\theta_m, \Phi_{mi})= \sum_{k=1}^{K_m} \alpha_{mki}\, \mathbf{a}(\theta_m, f_{mk}) \text{ avec } \Phi_{mi}=\begin{bmatrix} f_{m1} \\ \alpha_{m1i} \\ \vdots \\ f_{mK_m} \\ \alpha_{mK_m i} \end{bmatrix} \text{ pour } 1\leq i \leq K_m \tag{56}$$

D'après (54) et (56) les vecteurs $\mathbf{b}(\theta_m, \Phi_{mi})$ s'écrivent :

$$\mathbf{b}(\theta_m, \ \Phi_{mi}) = U(\theta_m) \ \varphi(\Phi_{mi}) \quad \text{pour} \ \ 1 \leq i \leq K_m \qquad (57)$$

Avec :

$$U(\theta_m) = \begin{bmatrix} \mathbf{U}_{f_0}(\theta_m) & \cdots & \mathbf{U}_{f_0}(\theta_m) \end{bmatrix} \quad \text{et} \quad \varphi(\Phi_{mi}) = \begin{bmatrix} \alpha_{m1i} \\ \vdots \\ \alpha_{mK_m i} \end{bmatrix} \otimes \begin{bmatrix} \varphi_{f_0}(f_{m1}) \\ \vdots \\ \varphi_{f_0}(f_{mK_m}) \end{bmatrix} \qquad (58)$$

L'expression (58) montre que les vecteurs de paramètres $\Phi_{mi}$ dépendent de la fréquence centrale $f_{mc}$ et de la bande $B_m$ du signal de la $m^{\text{ième}}$ source :

$$\cdots f_{mc} = \frac{1}{p_{m1} + \ldots + p_{mK_m}} \sum_{k=1}^{K_m} p_{mk} \ f_{mk} \quad \text{et}$$

$$\qquad\qquad\qquad\qquad\qquad\qquad\qquad\qquad (59)$$

$$B_m^{\ 2} = \frac{1}{p_{m1} + \ldots + p_{mK_m}} \sum_{k=1}^{K_m} p_{mk} \ (f_{mk} - f_{mc})^2$$

Où $p_{mk} = E[|s_m(t, f_{mk})|^2]$. En conséquence après une estimation des $\Phi_{mi}$ et de $p_{mk}$ il est possible de déduire la fréquence centrale $f_{mc}$ et la bande $B_m$ de la $m^{\text{ième}}$ source.

- **Cas des sources diffuses (figure 4)** : Dans le cas des sources diffuses une source se décompose suivant plusieurs sources comme une source large bande. Toutefois cette décomposition ne se fait pas en fréquence mais se fait en incidence. En présence de sources diffuses le modèle de l'équation (1) devient :

$$\mathbf{x}(t) = \sum_{m=1}^{M} \ \sum_{k=1}^{K_m} \ \rho_m \ \mathbf{a}(\theta_m + \delta\theta_{mk}) \ s_m(t - \delta\tau_{mk}) + \mathbf{n}(t) \qquad (60)$$

Où le signal de la $m^{\text{ième}}$ source se décompose en $K_m$ sources discrètes d'amplitude complexe $\rho_m \ s_m(t - \delta\tau_m)$ et d'incidence $\theta_m + \delta\theta_{mk}$. Après un DL de $\mathbf{a}(\theta)$ autour de l'incidence centrale $\theta = \theta_0$, le vecteur $\mathbf{a}(\theta_0 + \delta\theta)$ s'écrit :

$$\mathbf{a}(\theta_0 + \delta\theta) = U_0(\theta_0) \ \varphi_0(\delta\theta) \qquad (61)$$

D'après (60), il existe $K_m$ vecteurs directeurs associés à la source d'incidence centrale $\theta_m$. Ces vecteurs ont l'expression suivante :

$$\mathbf{b}(\theta_m, \Phi_{mi}) = \sum_{k=1}^{K_m} \alpha_{mki} \ \mathbf{a}(\theta_m + \delta\theta_{mk}) \ \text{avec} \ \Phi_{mi} = \begin{bmatrix} \delta\theta_{m1} \\ \alpha_{m1i} \\ \vdots \\ \delta\theta_{mK_m} \\ \alpha_{mK_mi} \end{bmatrix} \ \text{pour} \ 1 \leq i \leq K_m \qquad (62)$$

D'après (61) et (62) les vecteurs $\mathbf{b}(\theta_m, \Phi_{mi})$ s'écrivent :

$$\mathbf{b}(\theta_m, \Phi_{mi}) = U(\theta_m) \ \varphi(\Phi_{mi}) \quad \text{pour} \ 1 \leq i \leq K_m \qquad (63)$$

Avec:

$$U(\theta_m) = \begin{bmatrix} \mathbf{U_0}(\theta_m) & \cdots & \mathbf{U_0}(\theta_m) \end{bmatrix} \ \text{et} \ \varphi(\Phi_{mi}) = \begin{bmatrix} \alpha_{m1i} \\ \vdots \\ \alpha_{mK_mi} \end{bmatrix} \otimes \begin{bmatrix} \varphi_0(\delta\theta_{m1}) \\ \vdots \\ \varphi_0(\delta\theta_{mK_m}) \end{bmatrix} \qquad (64)$$

L'expression (64) montre très clairement que les vecteurs de paramètres $\Phi_{mi}$ dépendent de la largeur de cône $\Delta\theta_m$ du signal de la $m$ième source :

$$\Delta\theta_m{}^2 = \frac{1}{p_{m1} + \dots + p_{mK_m}} \sum_{k=1}^{K_m} p_{mk} (\delta\theta_{mk})^2 \qquad (65)$$

Où $p_{mk}$=E[|$s_m(t-\delta\tau_{mk})$|²]. En conséquence après une estimation des $\Phi_{mi}$ et de $p_{mk}$ il est possible de déduire la largeur de cône $\Delta\theta_m$ du signal de la $m$ième source.

**Modélisation en Combinant les perturbations**

Les perturbations de la réponse du réseau de capteurs cités ci-dessus peuvent toutes se combiner les unes avec les autres. Il est ainsi possible de combiner la diversité de polarisation avec le couplage inter-capteurs, les trajets cohérents , le front d'onde courbe, le large bande et les sources diffuses. C'est ainsi qu'il est donné ci-dessous des exemples de combinaisons. Les différents cas sont représentés par les figures 4 à 8.

- **Exemple n°1 : couplage (figures 5 et 6) et polarisation** : En associant le couplage et la polarisation, le vecteur $\mathbf{b}(\theta, \Phi)$ s'écrit d'après (33) et (34):

$$\mathbf{b}(\theta, \Phi) = \mathbf{Z} (P_H \ \mathbf{a}(\theta)^1 + P_V \ \mathbf{a}(\theta)^2) = U(\theta) \ \Phi \qquad (66)$$

Sachant que $\mathbf{Z} \ \mathbf{a}(\theta)^1 = \mathbf{U}(\theta)^1 \ \Phi_Z$ et $\mathbf{Z} \ \mathbf{a}(\theta)^2 = \mathbf{U}(\theta)^2 \ \Phi_Z$ , la matrice $\mathbf{U}(\theta)$ et le vecteur $\Phi$ s'écrivent :

$$U(\theta) = \begin{bmatrix} U^1(\theta) & 0 \\ 0 & U^2(\theta) \end{bmatrix} \quad et \quad \Phi = P \otimes \Phi_Z \qquad (67)$$

Où $P = [P_H \ P_V]^T$ est le vecteur des composantes de la polarisation.

• **Exemple n˚2 : Front d'onde courbe (figures 3 et 8) et large bande** : Dans ce cas la réponse du $n^{ième}$ capteur à une source d'incidence $\theta$ dépend aussi de la distance $D$ et de la fréquence $f$ de l'émetteur d'après l'équation (50) :

$$a_n(\theta, D, f) = \exp(-j2\pi \frac{f}{c} (k_n(\theta,D)^T u_n)) \frac{c}{D_n f} \qquad (68)$$

Le vecteur $b(\theta, \Phi = [\ Df]^T)$ de l'équation (51) devient après un DL sur $\Phi = [\ Df]$:

$$a(\theta, \Phi = [\ Df]^T) = \begin{bmatrix} a_1(\theta, D, f) \\ \vdots \\ a_N(\theta, D, f) \end{bmatrix} = U_{f0}(\theta) \ \varphi_{f0}(\ D, f) \qquad (69)$$

Et le vecteur de paramètre $\Phi_{mi}$ contenu dans $b(\theta_m, \Phi_{mi})$ de l'équation (56) dépend non seulement des $\alpha_{mki}$ et fréquence $f_{mk}$ mais aussi de la distance $D_m$ du $m^{ième}$ émetteur.

• **Exemple n˚3 illustré: Couplage (figures 5 et 6) et autres perturbations** :
Lorsque le réseau de capteurs couplés contient des capteurs dont la réponse $a(\theta, \Phi)$ dépend d'un vecteur de paramètre $\Phi$ où $a(\theta, \Phi) = U_1(\theta) \ \varphi_1(\Phi)$, le vecteur directeur combiné $b(\theta, \Phi)$ s'écrit d'après (34) :

$$b(\theta, \Phi) = Z \ a(\theta, \Phi) = Z \ U_1(\theta) \ \dot{\varphi}_1(\Phi) = V(Z, \theta) \ \varphi_1(\Phi) \qquad (70)$$

La $i^{ième}$ colonne $V_i(Z, \theta) = Z \ u_{1i}(\theta)$ de $V(Z, \theta)$ peut s'écrire $V_i(Z, \theta) = U_{1i}(\theta) \ \Phi_Z$ d'après (37), le vecteur $b(\theta, \Phi)$ devient :

$$b(\theta, \Phi) = [U_{1i}(\theta) \ \dots \ U_{1N}(\theta)] (\varphi_1(\Phi) \otimes \Phi_Z) \qquad (71)$$

**BIBLIOGRAPHIE**

[1] RO.Schmidt. A signal subspace approach to multiple emitter location and spectral estimation, November 1981.

[2] FERRERA , PARKS "Direction finding with an array of antennas having diverse polarizations", IEEE trans on antennas and propagation, mars 1983.

[3] S.VALAE, B.CHAMPAGNE and P.KABAL « Parametric Localization of Distributed Sources » , IEEE trans on signal processing, Vol 43 n˚9 seprrembre 1995

[4] D.ASZTELY, B.OTTERSTEN and AL. SWINDLEHURST « A Generalized array manifold model for local scattering in wireless communications», Proc of ICASSP, pp 4021-4024 , Munich 1997.

[5] M.BENGTSSON and B.OTTERSTEN « Low-Complexity Estimators for Distributed Sources» ,trans on signal processing , vol 48 , n˚8 , août 2000.

[6] H.Wang et M.Kaveh Wideband adaptative array based on the coherent signal-subspace transformation", ICASSP 87, Dallas, pp2011-2014.

[7] H.Wang et M.Kaveh Coherent Signal Subspace processing for the detection and estimation of multiple wideband sources, IEEE trans on ASSP, vol 33, n˚4,pp823-831,1985

[8] Y.Grenier et Ph.Loubaton Localisation de sources large bande par des méthodes temporelles 12ième Colloque GRETSI, Juans les Pins , juin 1989.

[9] B.Senadji et Y.Grenier Broadband source localization by regularization techniques, ICASSP 93, pp 321-324.

[10] KM Buckley , LJ.Griffiths Eigenstructure Based broadband Source Location Estimation, ICASSP 86 Tokyo.

[11] A.Ferréol and Marc Chenu-Tournier. Space Frequency direction finding in wide-band and multi-path contexts. ICASSP 2000, Istanbul.

[12] A.FLIELLER, A.FERREOL, P.LARZABAL, H.CLERGEOT « Robust bearing estimation in the presence of direction-dependent modelling errors : identifiability and treatment » , ICASSP 1994.

[13] A.FERREOL et P.LARZABAL « Un algorithme non itératif pour la localisation de sources avec des erreurs de modèle dépendant de leur direction », GRETSI , Juan les pins , septembre 1993 , pp 237-240

[14] FR. Gantmacher "The theory of matrices", 1959 , Vol I-II, Chelsa.

[15] CC.Yeh and ML.Leou and DR.Ucci « Bearing estimations with mutual coupling present », IEEE trans on antennas propagation , Vol 37, n˚10 , october 1989 , pp 1332-1335

[16] B.Himed and D.Weiner « Compensation for mutual coupling effects in direction finding », ICASSP 1990

[17] Steykal and JS.Herd « Mutual Coupling compensation in Small Array Antennas », IEEE trans on antennas propagation , Vol 38, n˚12 , december 1990, pp 1971-1975

## Revendications

1. Procédé de goniométrie multi-paramètres de plusieurs sources dans un réseau de N capteurs, où chaque source dépend d'un angle d'arrivée ou paramètre d'intérêt ainsi que de plusieurs paramètres secondaires de perturbations du front d'onde, recevant un mélange linéaire de M sources de direction d'arrivée ou DOA, $\theta_m$, avec $1 \leq m \leq M$, le vecteur d'observation correspondant aux signaux reçus sur les capteurs s'exprimant comme une combinaison linéaire des réponses au réseau de capteurs de chacun des émetteurs avec l'enveloppe complexe du signal du $m^{\text{ième}}$ émetteur **caractérisé en ce qu'**il comporte au moins les étapes suivantes :

   ○ a) choisir un paramètre à déterminer ou paramètre d'intérêt,
   ○ b) exprimer le vecteur directeur, ou réponse du réseau de capteurs à une source d'incidence $\theta$ et de vecteur de nuisance $\Phi_0$, sous la forme d'une relation linéaire entre le paramètre d'intérêt choisi et les paramètres secondaires, $\mathbf{b_0}(\theta,\Phi_0) = U_0(\theta)\, \varphi_0(\Phi_0)$
   ○ c) appliquer une étape de goniométrie de type MUSIC en factorisant le critère servant à la détermination des angles d'incidence ou paramètre d'intérêt afin de déterminer au moins le paramètre incidence, le critère utilisé dans la méthode MUSIC étant constitué du rapport des déterminants des matrices $Q_1(\theta) = U(\theta)^H \Pi_b U(\theta)$ et $Q_2(\theta) = U(\theta)^H U(\theta)$, où $\Pi_b$ est le projecteur bruit, et $U(\theta)$ le paramètre d'incidence ou paramètre d'intérêt,
   ○ d) à partir de la valeur d'incidence, déterminer le vecteur représentatif des paramètres secondaires et exprimer ce vecteur sous la forme d'une relation linéaire entre un paramètre choisi à déterminer et les autres paramètres secondaires,
   ○ e) appliquer une étape de goniométrie de type MUSIC en factorisant le critère servant à la détermination du paramètre choisi,

○ f) réitérer les étapes d) à e) afin de déterminer la majorité ou l'ensemble des paramètres secondaires.

**2.** Procédé selon la revendication 1 **caractérisé en ce que** le vecteur de nuisance est composé des paramètres secondaires tels que la distance des émetteurs en front d'onde sphérique, la bande fréquentielle des signaux, les coefficients de couplage du réseau, la largeur de cône des sources diffuses, la polarisation.

**3.** Procédé selon la revendication 1 ou 2 **caractérisé en ce que** l'étape b) comprend une étape de séparation du paramètre d'incidence $\theta$ des paramètres secondaires $\Phi$ en modélisant le vecteur directeur $\mathbf{b}(\theta, \Phi)$ par. $\mathbf{b}(\theta, \Phi)= \mathbf{U}(\theta)\, \gamma(\Phi)$.

**4.** Procédé selon la revendication 1 ou 2 **caractérisé en ce que** l'étape d) comprend une étape de séparation du paramètre choisi $\varphi$ et des autres paramètres secondaires $\Phi'$ en modélisation le vecteur $\gamma(\Phi)$ par $\gamma(\Phi) = \mathbf{G}_1(\varphi)\, \gamma_1(\Phi')$.

**5.** Procédé selon la revendication 1 **caractérisé en ce qu'**il comporte une étape de transformation du vecteur d'observation correspondant aux signaux reçus sur les capteurs afin d'augmenter la capacité de la goniométrie en nombre de sources.

**6.** Procédé selon la revendication 5 **caractérisé en ce que** la transformation est une transformation spatio-temporelle.

**7.** Procédé selon la revendication 4 **caractérisé en ce que** la transformation est une transformation exploitant la non circularité du signal tel que $\mathbf{y}(t)= f(\mathbf{x}(t))=[\ \mathbf{x}(t)^{\mathrm{T}}\ \exp(j2\pi\beta t)\ \mathbf{x}_{(t)}^{*\mathrm{T}}]^{\mathrm{T}}$.

**8.** Procédé selon l'une des revendications 5 et 6 **caractérisé en ce que** la transformation est une transformation spatio-temporelle exploitant la non circularité.

**9.** Procédé selon la revendication 1 et 4 **caractérisé en ce que** la méthode MUSIC calcule le projecteur bruit $\Pi_b$ sur la quadricovariance de x(t) ou de sa version transformée $\mathbf{y}(t)= f(\mathbf{x}(t))$.

**10.** Procédé selon la revendication 2 **caractérisé en ce que** l'on détermine le vecteur $\Phi_m=[\varphi_{m1}...\varphi_{mK}]$ de $\gamma(\Phi_m)$ en effectuant les étapes suivantes pour $1\leq m< M$:

→ *Etape - A* : Initialisation à k=1, $\Phi_m'=[\varphi_{m2}...\varphi_{mK}]$
→ *Etape - B* : Calcul de $\Pi_m = \mathbf{I} - \gamma(\Phi_m)\, \gamma(\Phi_m)^{\#}$
→ *Etape - C* : Modélisation de $\gamma(\Phi_m) = \mathbf{G}_1(\varphi_{mk})\, \gamma_1(\Phi_m')$
→ *Etape - D* : Calcul du critère $C_{m\text{-det}}(\varphi)$ des équations

$$C_{m\text{-det}}(\varphi) = \frac{\det(\mathbf{Q}_{m1}(\varphi))}{\det(\mathbf{Q}_{m2}(\varphi))}$$

Avec :

$$\mathbf{Q}_{m1}(\varphi) = \mathbf{G}_1(\varphi)^{\mathrm{H}}\, \mathbf{\Pi}_m\, \mathbf{G}_1(\varphi)\ \ \text{et}\ \ \mathbf{Q}_{m2}(\varphi) = \mathbf{G}_1(\varphi)^{\mathrm{H}}\, \mathbf{G}_1(\varphi)$$

→ *Etape - E* : Minimisation de $C_{m\text{-det}}(\varphi)$ pour obtenir $\varphi_{mk}$.

→ *Etape - F* : Détermination de $\gamma_1(\Phi_m')$ en cherchant le vecteur propre généralisé associé à la valeur propre

$$\lambda_{\min}^{G}\,\{\mathbf{Q}_{m1}(\varphi_{mk})\,,\,\mathbf{Q}_{m2}(\varphi_{mk})\}.$$

→ *Etape - G* : Si k<K: $\gamma(\Phi_m)\leftarrow \gamma_1(\Phi_m')$, $\Phi_m' =[\varphi_{m(k+1)}...\varphi_{mK}]$ et $k\leftarrow(k+1)$ retour à l'*Etape -B*.

**11.** Procédé selon la revendication 1 **caractérisé en ce qu'**il comporte une étape où l'on effectue un développement limité autour d'un paramètre constant $\Phi=\Phi_0$ avant d'effectuer l'étape b).

**Claims**

1. Multi-parameter goniometry process from several sources in an array of N sensors, wherein each source depends on an angle of arrival or parameter of interest and depends also on several secondary wave front interference parameters, which receive a linear mix of M sources of direction of arrival or DOA, $\theta_m$, wherein $1 \leq m \leq M$, the observation vector corresponding to the signals received at the sensors being expressed as a linear combination of the responses to the sensor array of each of the emitters with the complex signal envelope of the $m^{th}$ emitter, **characterised in that** it comprises at least the following steps:

   a) selecting a parameter to be determined or parameter of interest,
   b) expressing the direction vector, or response of the sensor array to an incidence source $\theta$ and of the interference vector $\Phi_0$, as a linear relation between the selected parameter of interest and the secondary parameters, $b_0(\theta, \Phi_0)=U_0(\theta)\ \varphi_0(\Phi_0)$,
   c) applying a MUSIC type goniometry step by factorising the criterion used to determine the angles of incidence or parameter of interest in order to determine at least the parameter of incidence, the criterion used in the MUSIC method comprising the ratio of matrix discriminants $Q_1(\theta)=U(\theta)^H\ \Pi_b\ U(\theta)$ and $Q_2(\theta)=U(\theta)^H\ U(\theta)$, where $\Pi_b$ is the projected noise, and $U(\theta)$ is the parameter of incidence or parameter of interest,
   d) using the incidence value to determine the vector which represents the secondary parameters and expressing this vector as a linear relation between a selected parameter to be determined and the other secondary parameters,
   e) applying a MUSIC type goniometry step by factorising the criterion used to determine the selected parameter,
   f) repeating steps d) to e) in order to determine the majority or all of the secondary parameters.

2. Process according to claim 1, **characterised in that** the interference vector is composed of secondary parameters such as the distance from the spherical wave front emitters, the signal frequency band, the array connection coefficients, the cone width of the diffuse sources and the polarisation.

3. Process according to claim 1 or 2, **characterised in that** step b) comprises a step for separating the parameter of incidence $\theta$ from the secondary parameters $\Phi$ by modelling the direction vector $b(\theta, \Phi)$ by $b(\theta, \Phi)=U(\theta)\ \gamma(\Phi)$.

4. Process according to claim 1 or 2, **characterised in that** step d) comprises a step for separating the selected parameter $\varphi$ and the other secondary parameters $\Phi'$ by modelling the vector $\gamma(\Phi)$ by $\gamma(\Phi)=G_1(\varphi)\ \gamma_1\ (\Phi')$.

5. Process according to claim 1, **characterised in that** it comprises a step for transforming the observation vector corresponding to the signals received at the sensors in order to increase goniometry capacity in terms of the number of sources.

6. Process according to claim 5, **characterised in that** the transformation is a spatio-temporal transformation.

7. Process according to claim 4, **characterised in that** the transformation is a transformation exploiting the non-circularity of the signal so that $y(t)= f(x(t))=[x(t)^T\ \exp(j2\pi\beta t)\ x(t)^{*T}]^T$.

8. Process according to claim 5 or 6, **characterised in that** the transformation is a spatio-temporal transformation which uses the non-circularity.

9. Process according to claims 1 and 4, **characterised in that** the MUSIC method calculates the projected noise $\Pi_b$ on the quadricovariance of $x(t)$ or its transformed version $y(t)=f(x(t))$.

10. Process according to claim 2, **characterised in that** the vector $\Phi_n=[\varphi_{m1}\ ...\ \varphi_{mK}]$ of $\gamma(\Phi_m)$ is determined by performing the following steps for $1 \leq m < M$:

   Step-A: Initialisation at k=1, $\Phi_m'=[\varphi_{m2}\ ...\ \varphi_{mK}]$
   Step-B: Calculation of $\Pi_m=I-\gamma(\Phi_m)\ \gamma(\Phi_m)^\#$
   Step-C: Modelling of $\gamma(\Phi_m)=G_1(\varphi_{mk})\ \gamma_1(\Phi_m')$
   Step-D: Calculation of the criterion $C_{m-det}(\varphi)$ for equations

$$C_{m\text{-det}}(\varphi) = \frac{\det(\mathbf{Q}_{m1}(\varphi))}{\det(\mathbf{Q}_{m2}(\varphi))}$$

Where:

$$Q_{m1}(\varphi) = G_1(\varphi)^H \Pi_m G_1(\varphi) \text{ and } Q_{m2}(\varphi) = G_1(\varphi)^H G_1(\varphi)$$

Step-E: Minimisation of $C_{m\text{-det}}(\varphi)$ to obtain $\varphi_{mK}$

Step-F: Determination of $\gamma_1(\Phi_m')$ by searching for the generalised eigenvector associated with the eigenvalue

$$\lambda_{min}^G \{\mathbf{Q}_{m1}(\varphi_{mk}), \mathbf{Q}_{m2}(\varphi_{mk})\}.$$

Step-G: If k<K: $\gamma(\Phi_m) \leftarrow \gamma_1(\Phi_m)'$ $\Phi_m' = [\varphi_{m(k+1)}...\varphi_{mK}]$ and k←(k+1) return to step-B.

11. Process according to claim 1, **characterised in that** it comprises a step wherein limited development is performed around a constant parameter $\Phi = \Phi_0$ before performing step b).

**Patentansprüche**

1. Verfahren zum multiparametrischen Peilen von mehreren Quellen in einer Anordnung von N Sensoren, wobei jede Quelle von einem Ankunftswinkel oder Parameter von Interesse sowie von mehreren sekundären Wellenfrontstörungsparametem abhängig ist, die eine lineare Mischung von M Ankunftsrichtungs- oder DOA-Quellen, $\theta_m$, empfangen, wobei $1 \leq m \leq M$, wobei der Beoabachtungsvektor den von den Sensoren empfangenen Signalen entspricht, die als eine lineare Kombination der Reaktionen jedes der Sender auf die Sensoranordnung mit der komplexen Hüllkurve des Signals des $m^{\text{ten}}$ Senders ausgedrückt wird, **dadurch gekennzeichnet, dass** es wenigstens die folgenden Schritte beinhaltet:

a) Wählen eines zu bestimmenden Parameters oder eines Parameters von Interesse;
b) Ausdrücken des Richtungsvektors, oder der Reaktion der Anordnung von Sensoren auf eine Einfallsquelle $\theta$ und einen Störungsvektor $\Phi_0$, als eine lineare Beziehung zwischen dem gewählten Parameter von Interesse und den sekundären Parametern $b_0(\theta, \Phi_0) = U_0(\theta)\varphi_0(\Phi_0)$;
c) Anwenden eines Peilschrittes des MUSIC-Typs durch Faktorisieren des Kriteriums, das zum Ermitteln der Einfallswinkel oder des Parameters von Interesse dient, um wenigstens den Einfallsparameter zu bestimmen, wobei das in der MUSIC-Methode benutzte Kriterium das Verhältnis der Matrixdeterminanten $Q_1(\theta) = U(\theta)^H \Pi_b U(\theta)$ und $Q_2(\theta) = U(\theta)^H U(\theta)$ umfasst, wobei $\Pi_b$ das projizierte Rauschen und $U(\theta)$ der Einfallsparameter oder Parameter von Interesse ist,
d) Ermitteln, anhand des Einfallswertes, des für die sekundären Parameter repräsentativen Vektors und Ausdrücken dieses Vektors als eine lineare Beziehung zwischen einem zu bestimmenden gewählten Parameter und den anderen sekundären Parametern,
e) Anwenden eines Peilschrittes des MUSIC-Typs durch Faktorisieren des Kriteriums, das zum Bestimmen des gewählten Parameters führt,
f) Wiederholen der Schritte d) bis e), um die Mehrheit oder die Gesamtheit der sekundären Parameter zu bestimmen.

2. Verfahren nach Anspruch 1, **dadurch gekennzeichnet, dass** der Störungsvektor aus sekundären Parametern wie der Entfernung von den sphärischen Wellenfrontsendern, dem Signalfrequenzband, den Kopplungskoeffizienten der Anordnung, der Kegelbreite der diffusen Quellen und der Polarisation zusammengesetzt ist.

3. Verfahren nach Anspruch 1 oder 2, **dadurch gekennzeichnet, dass** Schritt b) einen Schritt des Trennens des Einfallsparameters $\theta$ von den sekundären Parametern $\Phi$ durch Modellieren des Richtungsvektors $b(\theta, \Phi)$ durch $b(\theta, \Phi) = U(\theta)\gamma(\Phi)$ beinhaltet.

4. Verfahren nach Anspruch 1 oder 2, **dadurch gekennzeichnet, dass** Schritt d) einen Schritt des Trennens des

gewählten Parameters φ und der anderen sekundären Parameter Φ' durch Modellieren des Vektors $\gamma(\Phi)$ durch $\gamma(\Phi) = G_1(\varphi)\gamma_1(\Phi')$ beinhaltet.

5. Verfahren nach Anspruch 1, **dadurch gekennzeichnet, dass** es einen Schritt des Transformierens des den an den Sensoren empfangenen Signalen entsprechenden Beobachtungsvektors beinhaltet, um die Peilkapazität im Sinne der Zahl der Quellen zu erhöhen.

6. Verfahren nach Anspruch 5, **dadurch gekennzeichnet, dass** die Transformation eine räumlich-zeitliche Transformation ist.

7. Verfahren nach Anspruch 4, **dadurch gekennzeichnet, dass** die Transformation eine Transformation ist, die die Nichtkreisförmigkeit des Signals nutzt, so dass $y(t) = f(x(t)) = [x(t)^T \exp(j2\pi\beta t) x(t)^{*T}]^T$.

8. Verfahren nach Anspruch 5 oder 6, **dadurch gekennzeichnet, dass** die Transformation eine räumlich-zeitliche Transformation ist, die die Nichtkreisförmigkeit nutzt.

9. Verfahren nach den Ansprüchen 1 und 4, **dadurch gekennzeichnet, dass** die MUSIC-Methode das projizierte Rauschen $\Pi_b$ auf der Quadri-Kovarianz von x(t) oder ihrer transformierten Version y(t)=f(x(t)) berechnet.

10. Verfahren nach Anspruch 2, **dadurch gekennzeichnet, dass** der Vektor $\Phi_m = [\varphi_{m1} \dots \varphi_{mK}]$ von $\gamma(\Phi_m)$ durch Ausführen der folgenden Schritte für $1 \leq m \leq M$ bestimmt wird:

   → Schritt A: Initialisieren mit k=1, $\Phi_m' = [\varphi_{m1} \dots \varphi_{mK}]$
   → Schritt B: Berechnen von $\Pi_m = I - \gamma(\Phi_m) \gamma(\Phi_m)^{\#}$
   → Schritt C: Modellieren von $\gamma(\Phi_m) = G_1(\varphi_{mk}) \gamma_1(\Phi_m')$
   → Schritt D: Berechnen des Kriteriums $C_{m\text{-}det}(\varphi)$ der Gleichungen

$$C_{m\text{-}det}(\varphi) = \frac{\det(Q_{m1}(\varphi))}{\det(Q_{m2}(\varphi))}$$

   wobei:

$$Q_{m1}(\varphi) = G_1(\varphi)^H \Pi_m G_1(\varphi) \text{ und } Q_{m2}(\varphi) = G_1(\varphi)^H G_1(\varphi)$$

   → Schritt E: Minimieren von $C_{m\text{-}det}(\varphi)$, um $\varphi_{mK}$ zu erhalten;

   → Schritt F: Ermitteln von $\gamma_1(\Phi_m')$ durch Suchen der generalisierten Eigenvektorgruppe in Verbindung mit dem Eigenwert $\lambda_{min}^G \{Q_{m1}(\varphi_{mk}), Q_{m2}(\varphi_{mk})\}$,
   → Schritt G: Si k<K: $\gamma(\Phi_m) \leftarrow \gamma_1(\Phi_m')$, $\Phi_m' = [\varphi_{m(k+1)} \dots \varphi_{mK}]$ und k←(k+1) zurück zu Schritt B.

11. Verfahren nach Anspruch 1, **dadurch gekennzeichnet, dass** es einen Schritt beinhaltet, in dem eine begrenzte Entwicklung um einen konstanten Parameter $\Phi = \Phi_0$ vor dem Ausführen von Schritt b) ausgeführt wird.

FIG.1

FIG.2

Fronts
d'onde

Vecteurs
d'onde

Emetteur

$K(\theta',D')$

$K(\theta,D)$

$\theta'$

$\theta$

Réseau
de capteurs

## FIG.3

Cône de diffusion
d'incidence $\Delta_0$ et
de largeur $\delta\Delta_0$

$\Delta_0$

$\delta\Delta_\theta$

Système de
réception et
goniométrie

Neige

Diffuseurs :
grains de
neige

## FIG.4

Couplage
entre capteurs de
coefficient Zij

Front d'onde

Source

$K(\theta)$

$K(\theta)$

$\theta$

Réseau
d'antennes

## FIG.5

Couplage entre le mât et les capteurs

Emetteur

$K(\theta)$    $K(\theta)$

Front d'onde

$R$

Capteurs

Mât

FIG.6

Source

Réseau de capteurs

$K(\theta_1)$

$K(\theta_2)$

$\theta_1$

$\theta_2$

Réflecteur

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A.Ferreol et al.** Space frequency direction finding in wide-band and multipath contexts. *IEEE,* 05 Juin 2000, vol. 5, 3113-3116
- **RO.Schmidt.** *A signal subspace approach to multiple emitter location and spectral estimation*
- **FERRERA ; PARKS.** Direction finding with an array of antennas having diverse polarizations. *IEEE trans on antennas and propagation,* Mars 1983
- **S.VALAE ; B.CHAMPAGNE ; P.KABAL.** Parametric Localization of Distributed Sources. *IEEE trans on signal processing,* Septembre 1995, vol. 43 (9
- **D.ASZTELY ; B.OTTERSTEN ; AL. SWINDLE-HURST.** A Generalized array manifold model for local scattering in wireless communications. *Proc of ICASSP,* 1997, 4021-4024
- **M.BENGTSSON ; B.OTTERSTEN.** Low-Complexity Estimators for Distributed Sources. *trans on signal processing,* Août 2000, vol. 48 (8
- **H.Wang ; M.Kaveh.** Wideband adaptative array based on the coherent signal-subspace transformation. *ICASSP 87,* 1987, 2011-2014
- **H.Wang ; M.Kaveh.** Coherent Signal Subspace processing for the detection and estimation of multiple wideband sources. *IEEE trans on ASSP,* 1985, vol. 33 (4), 823-831
- **Y.Grenier ; Ph.Loubaton.** Localisation de sources large bande par des méthodes temporelles 12ième Colloque GRETSI. *Juans les Pins,* Juin 1989
- **B.Senadji ; Y.Grenier.** Broadband source localization by regularization techniques. *ICASSP,* vol. 93, 321-324

- **KM Buckley ; LJ.Griffiths.** Eigenstructure Based broadband Source Location Estimation. *ICASSP 86 Tokyo,* 1986
- **A.Ferréol ; Marc Chenu-Tournier.** Space Frequency direction finding in wide-band and multi-path contexts. *ICASSP 2000,* 2000
- **A.FLIELLER ; A.FERREOL ; P.LARZABAL ; H.CLERGEOT.** Robust bearing estimation in the presence of direction-dependent modelling errors : identifiability and treatment. *ICASSP,* 1994
- **A.FERREOL ; P.LARZABAL.** Un algorithme non itératif pour la localisation de sources avec des erreurs de modèle dépendant de leur direction. *GRETSI , Juan les pins,* Septembre 1993, 237-240
- **FR. Gantmacher.** The theory of matrices. *The theory of matrices,* 1959, vol. I-II
- **CC.Yeh ; ML.Leou ; DR.Ucci.** Bearing estimations with mutual coupling present. *IEEE trans on antennas propagation,* Octobre 1989, vol. 37 (10), 1332-1335
- **B.Himed ; D.Weiner.** Compensation for mutual coupling effects in direction finding. *ICASSP 1990,* 1990
- **Steykal ; JS.Herd.** Mutual Coupling compensation in Small Array Antennas. *IEEE trans on antennas propagation,* Décembre 1990, vol. 38 (12), 1971-1975